# EUROPÄISCHE PATENTSCHRIFT

(11) **EP 3 224 001 B1**
(45) Veröffentlichungstag und Bekanntmachung des Hinweises auf die Patenterteilung: **20.06.2018**
(21) Anmeldenummer: 15801805.1
(22) Anmeldetag: 27.11.2015
(51) Int. Cl.: B25F 5/00, B25F 5/02

(54) **SELBSTSPERRENDE VERIEGELUNG EINER ADAPTERVORRICHTUNG**
SELF-LOCKING LATCH OF AN ADAPTER DEVICE
VERROUILLAGE AUTOBLOQUANT D'UN DISPOSITIF D'ADAPTATEUR

(30) Priorität: 27.11.2014 EP 14195068
(43) Veröffentlichungstag der Anmeldung: 04.10.2017
(73) Patentinhaber: Hilti Aktiengesellschaft, 9494 Schaan (LI)
(72) Erfinder: THANNER, Thomas, 81243 München (DE); RICHTER, Rene, 86199 Augsburg (DE); STEMPFHUBER, Johannes, 86899 Landsberg (DE)
(74) Vertreter: Hilti Aktiengesellschaft Corporate Intellectual Property
(86) Internationale Anmeldenummer: PCT/EP2015/077867
(87) Internationale Veröffentlichungsnummer: WO 2016/083555

(56) Entgegenhaltungen:
- EP-A2- 1 833 137
- EP-A2- 1 903 657
- DE-A1-102012 104 538
- FR-A3- 2 884 446
- GB-A- 2 433 350
- US-A1- 2011 198 103

## Beschreibung

Die vorliegende Erfindung bezieht sich auf eine Adaptervorrichtung zum Verbinden eines Akkumulators mit einer Werkzeugmaschine, enthaltend eine Verriegelungseinrichtung zum Verriegeln der Adaptervorrichtung mit der Werkzeugmaschine; sowie eine Sperreinrichtung zum Sperren der Verriegelungseinrichtung.

Für gewöhnlich werden Werkzeugmaschinen nicht direkt bzw. unmittelbar mit einem jeweiligen Akkumulator verbunden. Zwischen der Werkzeugmaschine und dem Akkumulator wird häufig eine Adaptervorrichtung positioniert. Diese Adaptervorrichtung dient dazu, verschiedenartige Werkzeugmaschinen mit unterschiedlichsten Akkumulatoren zu verbinden. Mit anderen Worten: die Adaptervorrichtung schafft die Kompatibilität zwischen den verschiedenen Schnittstellen der Werkzeugmaschinen und Akkumulatoren herzustellen, damit eine größtmögliche Kombinationsvielfalt zwischen den einzelnen Werkzeugmaschinen und Akkumulatoren geschaffen werden kann.

Adaptervorrichtungen gemäß dem Stand der Technik sind unter anderem in der deutschen Patentanmeldung DE 10 2012 104 538 offenbart. Die DE 10 2012 104 538 offenbart hierzu ein hydraulisch oder elektromotorisch betriebenes Werkzeug, beispielsweise ein Verpressgerät, mit einem Geräteschaft, der zumindest einen ersten und einen zweiten Elektrokontakt aufweist und mit einem mit dem Geräteschaft rastverbindbaren Akkumulator, wobei zwischen dem Geräteschaft und dem Akkumulator ein an dem Geräteschaft mittels einer Rastverbindung zu dem Geräteschaft und dem Akkumulator sicherbarer Adapter vorgesehen ist. Um eine vorteilhafte Verbindung eines Adapters mit einem Geräteschaft eines derartigen Gerätes vorzusehen, ist die Rastverbindung zu dem Geräteschaft nur durch Einwirkung auf ein im Inneren des Adapters angeordnetes Löseteil aufhebbar ist. Das Einwirken bzw. Anheben ist nur mit einem geeigneten Werkzeug, wie z.B. einem Schraubdreher, möglich.

Adaptervorrichtungen sind zudem häufig so ausgestaltet, dass diese einfach und schnell von der Werkzeugmaschine entfernt werden können. Akkumulatoren sind ebenfalls häufig so ausgestaltet, dass sie einfach und schnell von der Werkzeugmaschine und insbesondere von der Adaptervorrichtung entfernt werden können. Sowohl die Adaptervorrichtung als auch die Akkumulatoren werden hierzu üblicherweise mit einer Schiebeeinrichtung ausgestattet, mit denen die jeweilige Adaptervorrichtung sowie der jeweilige Akkumulator durch ein entsprechendes Ab- bzw. Herunterziehen entfernt werden kann.

Ein Problem besteht dabei in einem ungewollten Entfernen der Adaptervorrichtung von der Werkzeugmaschine zusammen mit dem Akkumulator, wenn lediglich der Akkumulator von der Werkzeugmaschine bzw. von der Adaptervorrichtung entfernt, d.h. gezogen, werden soll. Aufgabe der vorliegenden Erfindung ist es daher, eine Adaptervorrichtung zum Verbinden eines Akkumulators mit einer Werkzeugmaschine zur Verfügung zu stellen, die weiterhin ein einfaches sowie schnelles Entfernen von der Werkzeugmaschine ermöglicht, dabei jedoch ein ungewolltes Entfernen der Adaptervorrichtung von der Werkzeugmaschine verhindert, wenn lediglich der Akkumulator von der Werkzeugmaschine bzw. von der Adaptervorrichtung entfernt werden soll. Diese Aufgabe wird erfindungsgemäss durch den Gegenstand des unabhängigen Anspruchs 1 gelöst. Weitere Ausführungsformen des erfindungsgemässen Gegenstands finden sich in den abhängigen Unteransprüchen.

Es wird eine Adaptervorrichtung zum Verbinden eines Akkumulators mit einer Werkzeugmaschine bereitgestellt, enthaltend eine Verriegelungseinrichtung zum Verriegeln der Adaptervorrichtung mit der Werkzeugmaschine; sowie eine Sperreinrichtung zum Sperren der Verriegelungseinrichtung.

Erfindungsgemäss ist vorgesehen, dass die Verriegelungseinrichtung reversibel von einer ersten Position in eine zweite Position einstellbar ist, wobei in der ersten Position die Adaptervorrichtung mit der Werkzeugmaschine fest verbunden ist und in der zweiten Position die Adaptervorrichtung von der Werkzeugmaschine lösbar ist, und die Sperreinrichtung reversibel von einer erste Position in eine zweite Position einstellbar ist, wobei die Sperreinrichtung in der ersten Position die Verriegelungseinrichtung in der ersten Position sperrt und die Sperreinrichtung in der zweiten Position die Verriegelungseinrichtung nicht sperrt, sodass die Verriegelungseinrichtung von der ersten Position in die zweite Position bewegbar ist. Hierdurch wird ein einfaches sowie schnelles Entfernen der Adaptervorrichtung von der Werkzeugmaschine ermöglicht und gleichzeitig ein ungewolltes Entfernen der Adaptervorrichtung von der Werkzeugmaschine verhindert, wenn lediglich der Akkumulator von der Werkzeugmaschine bzw. von der Adaptervorrichtung entfernt werden soll.

Gemäß einer weiteren vorteilhaften Ausführungsform der vorliegenden Erfindung kann es möglich sein, dass die Sperreinrichtung durch ein Verbinden des Akkumulators mit der Adaptervorrichtung von der zweiten Position in die erste Position bewegbar ist. Hierdurch kann die Sperreinrichtung lediglich durch das Anbringen eines Akkumulators in die erste Position gebracht und die Verriegelungseinrichtung in der ersten Position gesperrt werden.

Entsprechend einer weiteren vorteilhaften Ausführungsform der vorliegenden Erfindung kann an der Adaptervorrichtung ein Druckfederelement vorgesehen sein, wodurch ein von der Federkraft des Druckfederelements erzeugter Abstand zwischen der Verriegelungseinrichtung und der Sperreinrichtung erzeugt wird, wenn kein Akkumulator mit der Adaptervorrichtung verbunden ist, wobei die Verriegelungseinrichtung wenigstens ein erstes Verriegelungselement enthält und der Abstand mindestens der Höhe des Verriegelungselements entspricht.. Hierdurch wird der Verriegelungseinrichtung Platz gegeben, um von der ersten Position in die zweite Position bewegt werden zu können.

Um zu verhindern, dass die Verriegelungseinrichtung von der ersten Position in die zweite Position wechselt, wenn kein Akkumulator mit der Adaptervorrichtung verbunden ist, kann es gemäß einer weiteren vorteilhaften Ausgestaltungsform der vorliegenden Erfindung möglich sein, dass die Verriegelungseinrichtung durch die Federkraft des Druckfederelements in der ersten Position gehalten wird.

Gemäß einer weiteren vorteilhaften Ausführungsform der vorliegenden Erfindung kann es möglich sein, dass die Verriegelungseinrichtung so ausgestaltet ist, dass die Verriegelungseinrichtung gegen die Federkraft des Druckfederelements von der ersten Position in die zweite Position wechselt, wenn die Adaptervorrichtung relativ zu der Werkzeugmaschine bewegt wird. Hierdurch kann die Adaptervorrichtung einfach und schnell sowie ohne den Einsatz eines Werkzeugs von der Werkzeugmaschine entfernt werden.

Um eine möglichst einfache sowie robuste Ausgestaltungsform für die Verriegelungseinrichtung bereitzustellen, die darüber hinaus auch ohne die Zuhilfenahme eines Werkzeuges bedient werden kann, ist es gemäß einer weiteren vorteilhaften Ausführungsform der vorliegenden Erfindung möglich, dass die Verriegelungseinrichtung in Form einer Schnappverbindung ausgestaltet ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine Werkzeugmaschine mit einer erfindungsgemäßen Adaptervorrichtung und einem Akkumulator in einem zusammengebauten Zustand;
- Fig. 2: die Werkzeugmaschine mit der Adaptervorrichtung und dem Akkumulator in einem auseinandergebauten Zustand;
- Fig. 3: eine perspektivische Ansicht auf den Akkumulator;
- Fig. 4: eine Draufsicht auf den Akkumulator;
- Fig. 5: eine Seitenansicht auf den Akkumulator;
- Fig. 6: eine Rückansicht auf den Akkumulator;
- Fig. 7: eine perspektivische Schnittansicht eines Fußelements der Werkzeugmaschine, der Adaptervorrichtung und des Akkumulators;
- Fig. 8: eine seitliche Schnittansicht eines Fußelements der Werkzeugmaschine, der Adaptervorrichtung und des Akkumulators;
- Fig. 9: eine perspektivische Ansicht eines Gehäuseelements der Adaptervorrichtung;
- Fig. 10: eine perspektivische Ansicht eines Deckelelements der Adaptervorrichtung;
- Fig. 11: eine perspektivische Ansicht einer Verriegelungseinrichtung zum Verriegeln der Adaptervorrichtung mit der Werkzeugmaschine;
- Fig. 12: eine Seitenansicht der Verriegelungseinrichtung;
- Fig. 13: eine Vorderansicht der Verriegelungseinrichtung;
- Fig. 14: eine Unteransicht der Verriegelungseinrichtung;
- Fig. 15: eine perspektivische Ansicht einer Sperreinrichtung zum Sperren der Verriegelungseinrichtung;
- Fig. 16: eine Unteransicht der Sperreinrichtung;
- Fig. 17: eine Vorderansicht der Sperreinrichtung;
- Fig. 18: eine Draufsicht der Sperreinrichtung;
- Fig. 19: eine Seitenansicht der Sperreinrichtung;
- Fig. 20: eine perspektivische Detailansicht der Adaptervorrichtung mit der Verriegelungseinrichtung in der ersten Position, der Sperreinrichtung in der ersten Position und eines Druckfederelements zwischen der Verriegelungseinrichtung und der Sperreinrichtung;
- Fig. 21: eine perspektivische Detailansicht des Deckelelements der Adaptervorrichtung, der Verriegelungseinrichtung in der ersten Position und der Sperreinrichtung in der ersten Position;
- Fig. 22: eine perspektivische Schnittansicht des Fußelements der Werkzeugmaschine, des Deckelelements der Adaptervorrichtung, eines Gehäuses der Adaptervorrichtung, der Verriegelungseinrichtung in der ersten Position und der Sperreinrichtung in der zweiten Position;
- Fig. 23: eine perspektivische Ansicht des Fußelements der Werkzeugmaschine, der Verriegelungseinrichtung in der ersten Position und einer Torsionsfeder;
- Fig. 24: eine perspektivische Ansicht des Fußelements der Werkzeugmaschine und der Verriegelungseinrichtung in der zweiten Position;
- Fig. 25: eine perspektivische Schnittansicht des Fußelements der Werkzeugmaschine, der Adaptervorrichtung mit der Sperreinrichtung in der zweiten Position und des von der Werkzeugmaschine versetzten Akkumulators; und
- Fig. 26: eine weitere perspektivische Schnittansicht des Fußelements der Werkzeugmaschine, der Adaptervorrichtung mit der Sperreinrichtung in der zweiten Position und des von der Werkzeugmaschine versetzten Akkumulators.

### Ausführungsbeispiel:

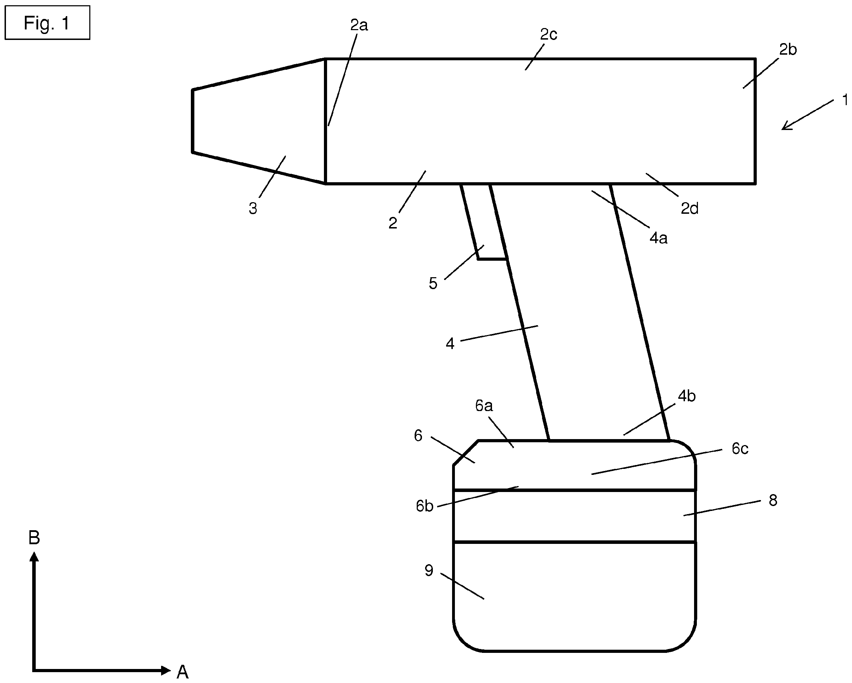

Fig. 1 zeigt eine Werkzeugmaschine 1 in Form eines Akkuschraubers. Die Werkzeugmaschine 1 enthält im Wesentlichen ein Gehäuse 2, eine Werkzeugaufnahme 3 und ein Griffstück 4.

Das Gehäuse 2 weist ein vorderes Ende 2a, ein hinteres Ende 2b, eine Oberseite 2c und eine Unterseite 2d auf. Die Werkzeugaufnahme 3 ist an dem vorderen Ende 2a des Gehäuses 2 positioniert und dient dazu, ein Werkzeug in Form eines Bits aufzunehmen. In den Figuren ist das Werkzeug nicht dargestellt.

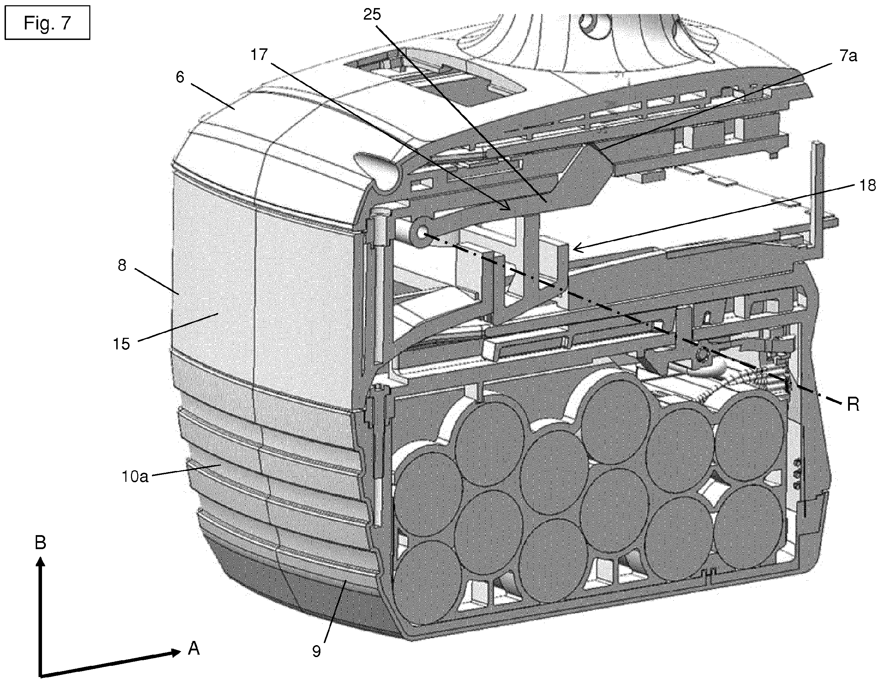

Das Griffstück 4 enthält ein oberes Ende 4a und ein unteres Ende 4b, wobei das Griffstück 4 mit dem oberen Ende 4a an der Unterseite 2d des Gehäuses 2 befestigt ist. Das Griffstück 4 weist einen Schalter 5 auf, mit dem die Werkzeugmaschine 3 aktiviert werden kann. An dem unteren Ende 4b des Griffstücks 4 ist ein Fußelement 6 vorgesehen. Das Fußelement 6 enthält im Wesentlichen eine Oberseite 6a, eine Unterseite 6b, eine linke Seite 6c und eine rechte Seite 6d. Die rechte Seite 6d ist identisch zu der linken Seite 6c und in den Figuren nicht dargestellt. An der Unterseite 6b sind ein erste winklige Vertiefung 7a und eine zweite winklige Vertiefung vorgesehen (vgl. Fig. 7). Die erste winklige Vertiefung 7a ist in der Nähe der linken Seite 6c und die zweite winklige Vertiefung ist in der Nähe der rechten Seite 6d positioniert. Die zweite winklige Vertiefung ist identisch zu der ersten winkligen Vertiefung 7a, jedoch in den Figuren nicht gezeigt.

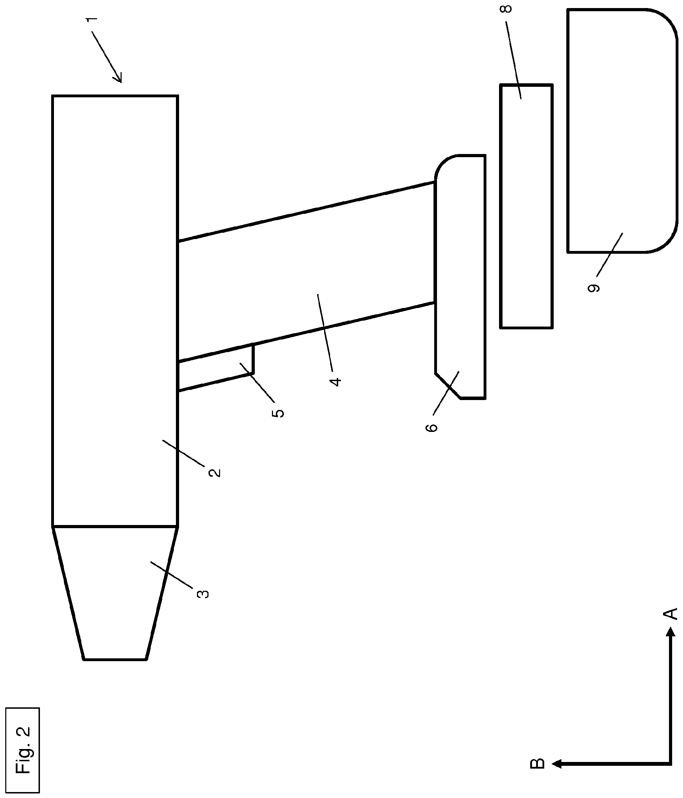

An dem Fußelement 6 ist eine erfindungsgemäße Adaptervorrichtung 8 positioniert, welche wiederum mit einem Akkumulator 9 verbunden ist. Die Adaptervorrichtung 8 dient im Wesentlichen dazu, den Akkumulator 9 mit dem Fußelement 6 der Werkzeugmaschine 1 zu verbinden. Der Akkumulator 9 versorgt die Werkzeugmaschine 1 mit elektrischer Spannung. In Fig. 1 ist die Werkzeugmaschine 1, die Adaptervorrichtung 8 und der Akkumulator 9 in einem zusammengebauten Zustand dargestellt. Im Vergleich dazu zeigt Fig. 2 die Werkzeugmaschine 1, die Adaptervorrichtung 8 und der Akkumulator 9 in einem auseinandergebauten Zustand. Wie nachfolgend im Detail beschrieben, werden hierzu die Adaptervorrichtung 8 relativ zu dem Fußelement 6 der Werkzeugmaschine 1 und der Akkumulator 9 relativ zu der Adaptervorrichtung 8 in Richtung A verschoben.

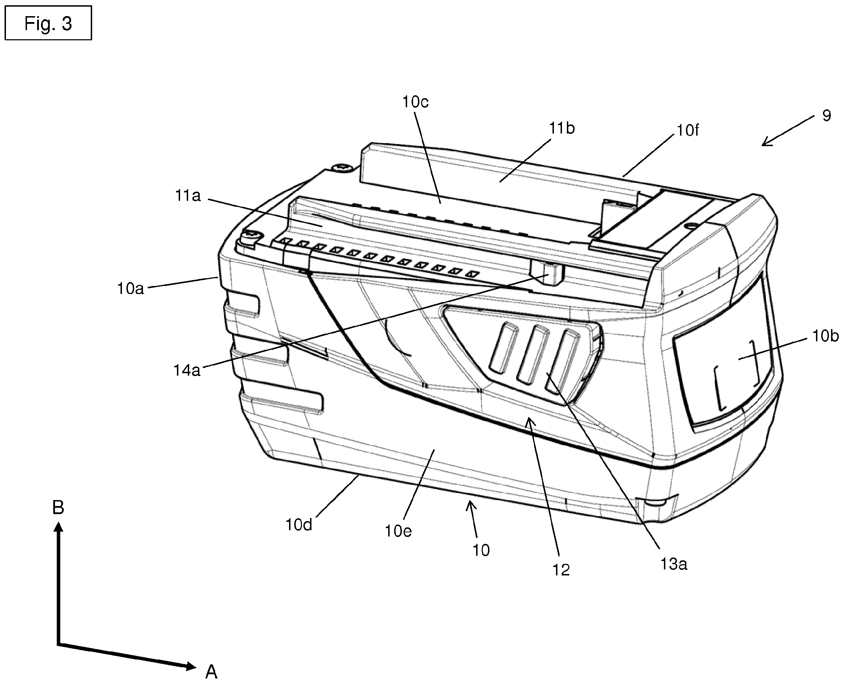

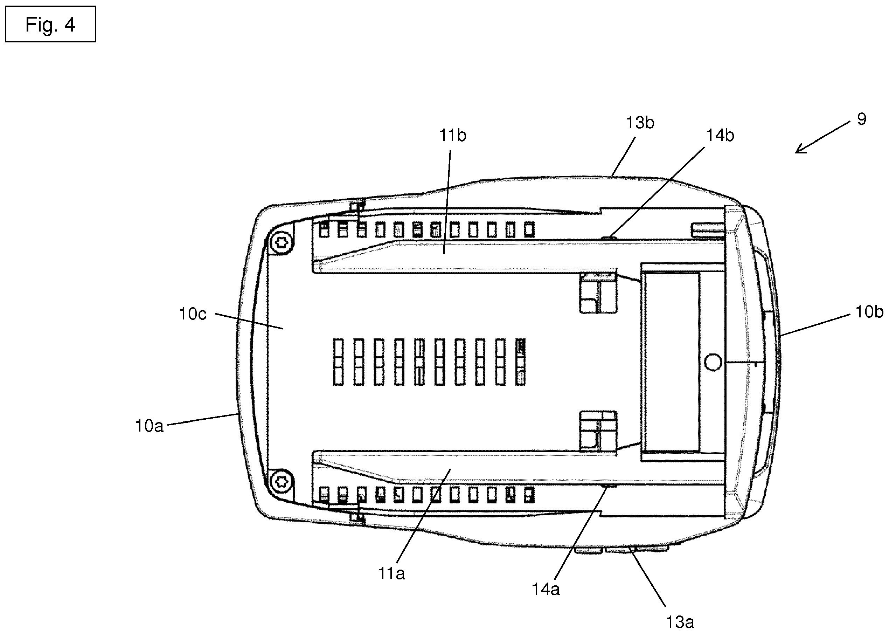

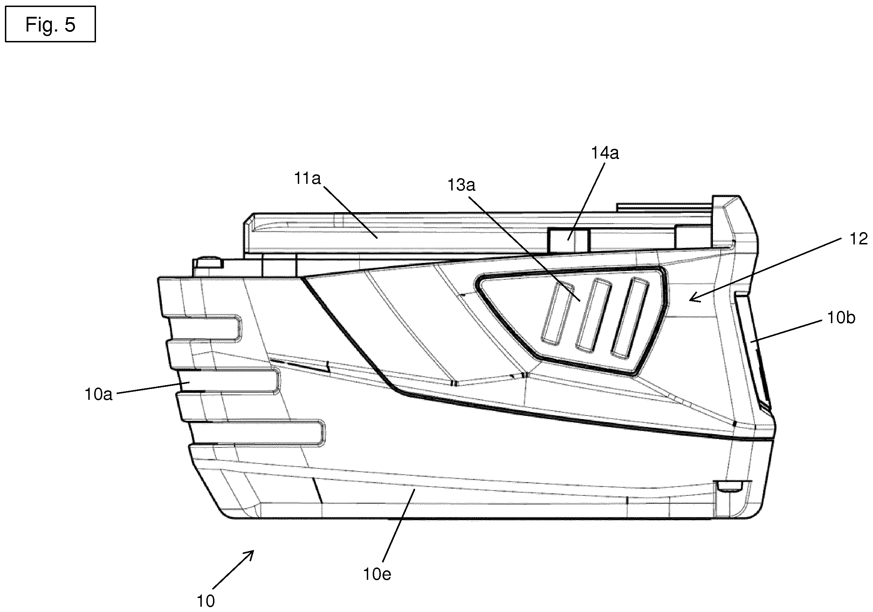

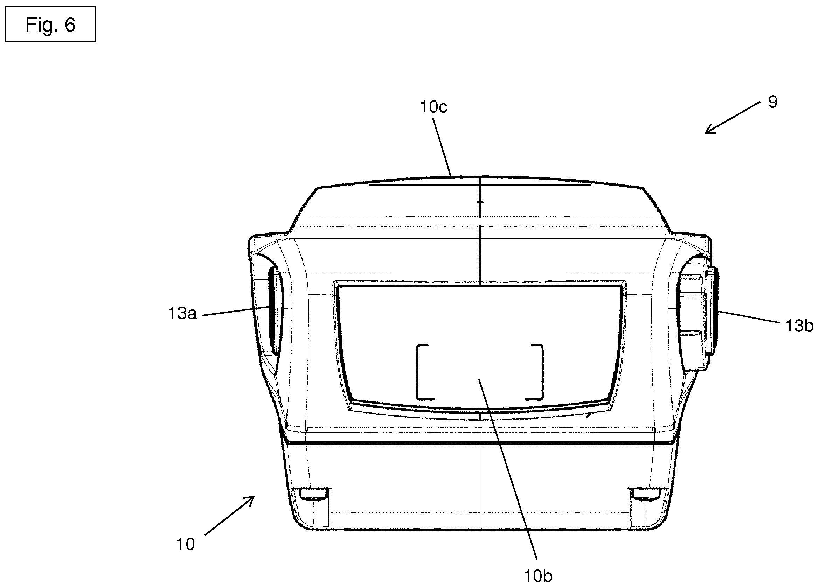

Fig. 3, 4, 5 und 6 zeigt den Akkumulator 9, welcher im Wesentlichen ein Akkugehäuse 10, eine erste Führungsschiene 11a, eine zweite Führungsschiene 11b sowie eine Betätigungseinrichtung 12 enthält. Das Akkugehäuse 10 enthält wiederum eine vordere Seite 10a, eine hintere Seite 10b, eine obere Seite 10c, eine untere Seite 10d, eine linke Seite 10e und ein rechte Seite 10f (in den Figuren ist lediglich die linke Seite 10e gezeigt).

Die erste und zweite Führungsschiene 11a, 11b sind an der oberen Seite 10c des Akkugehäuses 10 positioniert und verlaufen in Richtung A entlang einer Längsstreckung des Akkugehäuses 10.

Die Betätigungseinrichtung 12 enthält ein erstes Betätigungselement 13a, ein zweites Betätigungselement 13b, einen ersten Blockierkeil 14a und eine zweiten Blockierkeil 14b (in den Figuren ist lediglich das erste Betätigungselement und der erste Blockierkeil deutlich zu erkennen). Das erste Betätigungselement 13a ist an der linken Seite 10e und das zweite Betätigungselement 13b ist an der rechten Seite 10f positioniert. Sowohl das erste Betätigungselement 13a als auch das zweite Betätigungselement 13b ist in Form eines Druckschalters ausgestaltet. Der erste Blockierkeil 14a ist an der ersten Führungsschiene 11a und der zweite Blockierkeil 14b ist an der zweiten Führungsschiene 11b positioniert. Die Betätigungseinrichtung 12 dient dazu, den Akkumulator 9 mit der Adaptervorrichtung 8 zu verriegeln und auch wieder von der Adaptervorrichtung 8 zu lösen. Hierzu wird der erste Blockierkeil 14a durch das erste Betätigungselement 13a und der zweite Blockierkeil 14b durch das zweite Betätigungselement 13b aktiviert.

Fig. 7 zeigt eine Schnittansicht durch das Fußelement 6 der Werkzeugmaschine 1, die Adaptervorrichtung 8 und den Akkumulator 9.

Die Adaptervorrichtung 8 enthält im Wesentlichen ein Adaptergehäuse 15, einen Adapterdeckel 16, eine Verriegelungseinrichtung 17 sowie eine Sperreinrichtung 18.

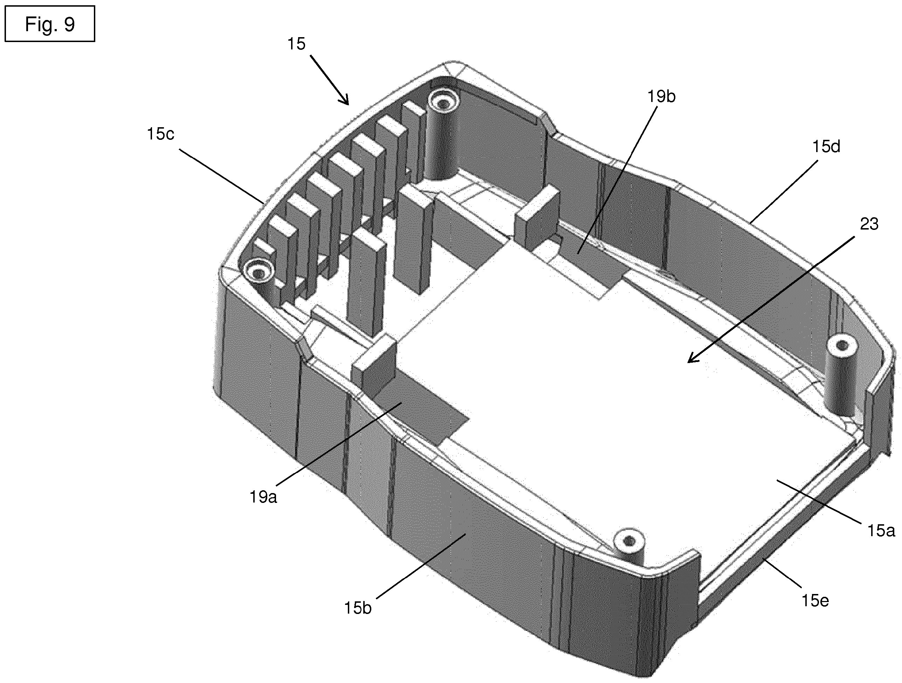

Das Adaptergehäuse 15 ist in Fig. 9 gezeigt und enthält im Wesentlichen einen Boden 15a, eine erste Seitenwand 15b, eine zweite Seitenwand 15c, eine dritte Seitenwand 15d und eine vierte Seitenwand 15e. In dem Boden 15a sind eine erste rechteckige Öffnung 19a und eine zweite rechteckige Öffnung 19b vorgesehen. Die erste Öffnung 19a befindet sich in der Nähe der ersten Seitenwand 15b und die zweite Öffnung 19b befindet sich in der Nähe der dritten Seitenwand 15d.

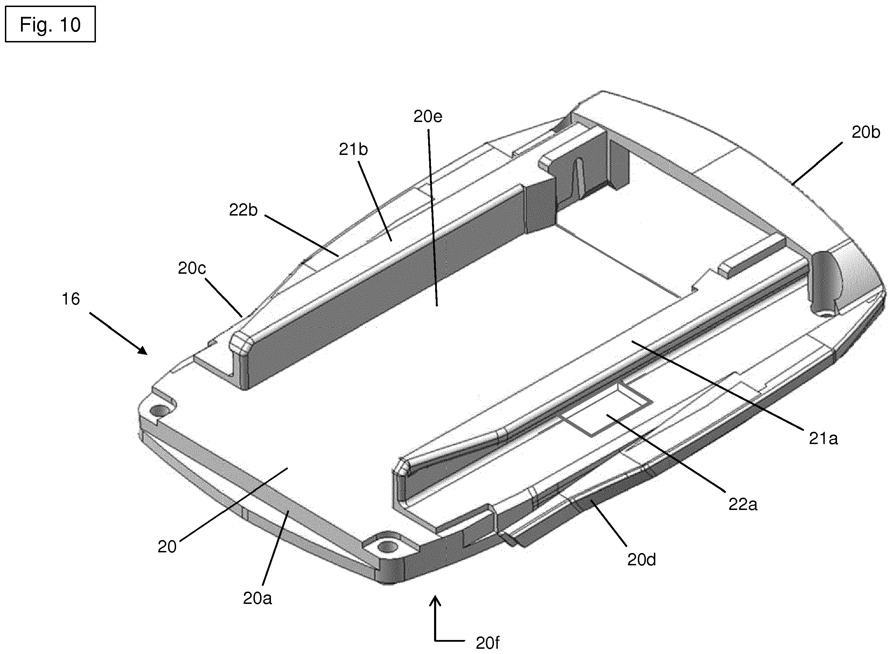

Der Adapterdecke 16 ist in Fig. 10 gezeigt und enthält im Wesentlichen eine rechteckige Grundplatte 20. Die Grundplatte 20 enthält wiederum eine vordere Seitenkante 20a, eine hintere Seitenkante 20b, eine rechte Seitenkante 20c, eine linke Seitenkante 20d, eine Oberseite 20e und eine Unterseite 20f. Auf der Oberseite 20e des Adapterdeckels 16 erstreckt sich eine erste Führungsschiene 21a und eine zweite Führungsschiene 21b. Die erste und zweite Führungsschiene 21a, 21b erstrecken sich entlang der Längserstreckung des Adapterdeckels 16. In der Nähe der linken Seitenkante 20d und an der ersten Führungsschiene 21a ist eine erste Öffnung 22a vorgesehen. Des Weiteren ist in der Nähe der rechten Seitenkante 20c und an der zweiten Führungsschiene 21b eine zweite Öffnung 22b vorgesehen. Die erste und zweite Öffnung 22a, 22b sind identisch, wobei in den Figuren lediglich die erste Öffnung 22a genau zu erkennen ist. Der Adapterdecke 16 wird mit der Unterseite 20f auf dem Adaptergehäuse 15 positioniert und befestigt. Hierdurch entsteht ein Hohlraum 23 in dem Adaptergehäuse 15, der durch die erste, zweite, dritte und vierte Seitenwand 15b, 15c, 15d, 15e des Adaptergehäuses 15 sowie durch die Grundplatte 20 des Adapterdeckels 16 gebildet ist. Wenn der Adapterdeckel 16 auf dem Adaptergehäuse 15 befestigt ist, kann mit Hilfe der beiden Führungsschienen 21a, 21b die Adaptervorrichtung 8 mit dem Fußelement 6 der Werkzeugmaschine 1 verbunden werden. Das Fußelement 6 der Werkzeugmaschine 1 enthält hierzu nicht gezeigte Aufnahmeelemente, in die die beiden Führungsschienen 21a, 21b so eingeschoben werden können, dass ein wieder lösbarer Halt zwischen der Adaptervorrichtung 8 und dem Fußelement 6 der Werkzeugmaschine 1 erzeugt wird.

In dem Hohlraum 23 der Adaptervorrichtung 8 bzw. des Adaptergehäuses 15 sind die Verriegelungseinrichtung 17 sowie die Sperreinrichtung 18 angeordnet. Die Ausgestaltung sowie die Anordnung der Verriegelungseinrichtung 17 und Sperreinrichtung 18 zueinander sind nachfolgend im Detail beschrieben.

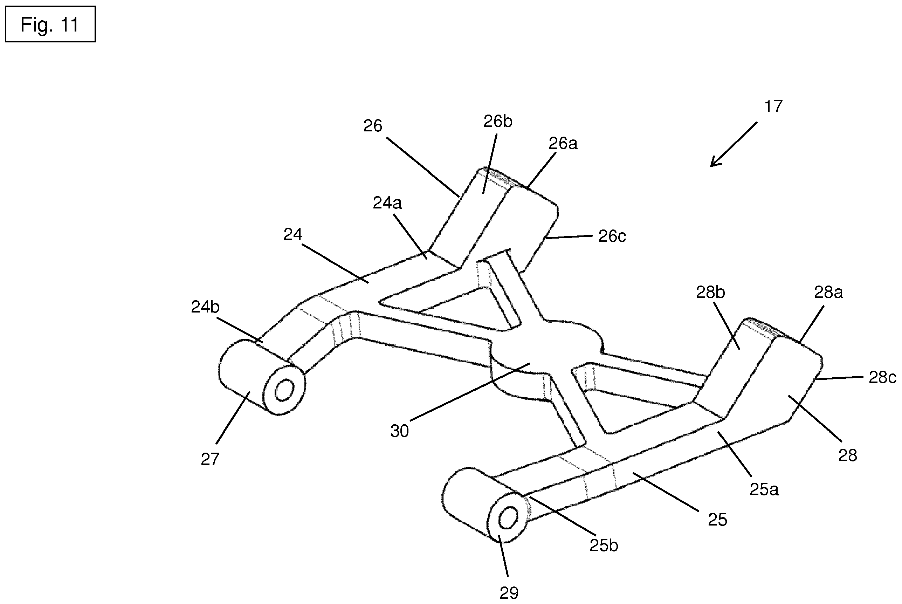

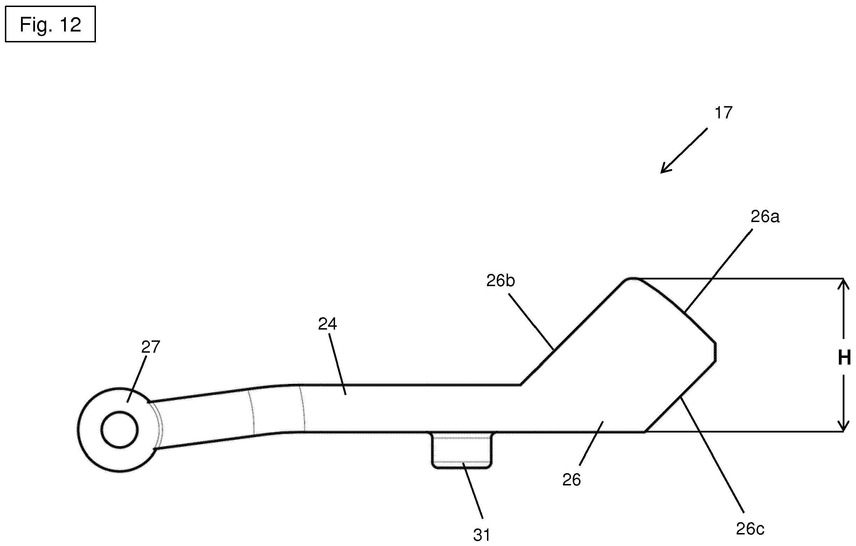

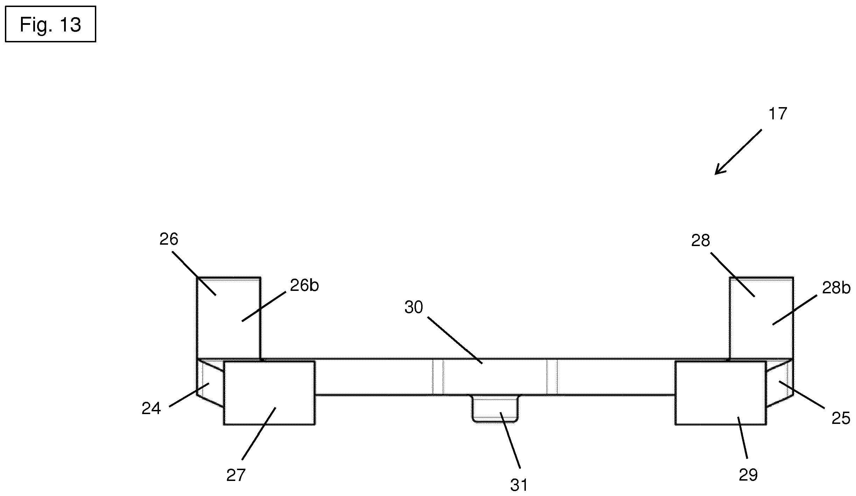

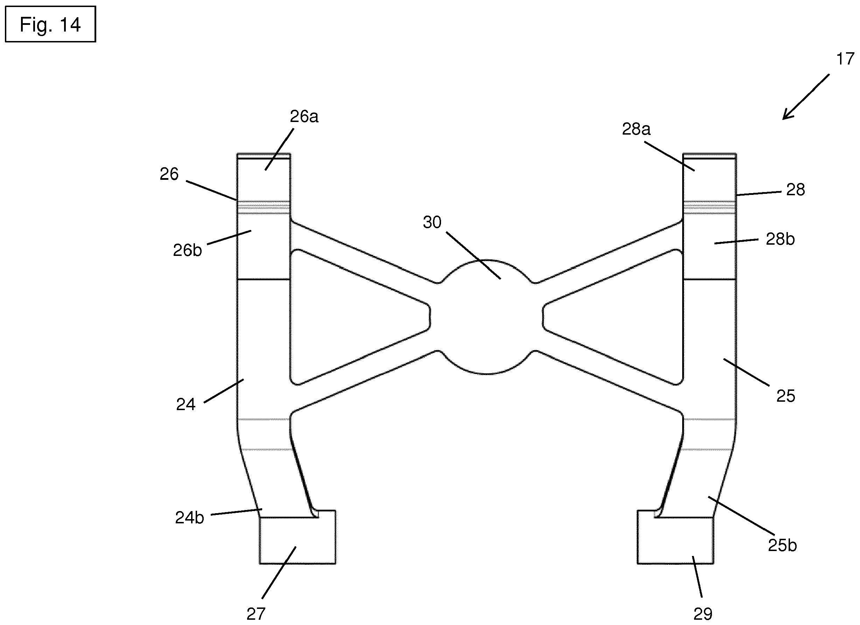

Die Verriegelungseinrichtung 17 ist für sich in den Fig. 11 bis 14 dargestellt und enthält im Wesentlichen ein erstes Armelement 24, ein zweites Armelement 25 und ein Verbindungsstück 30.

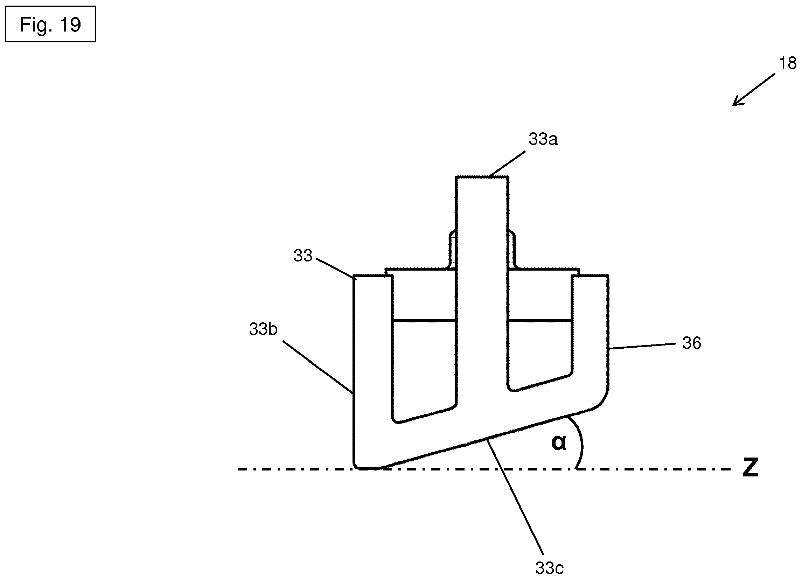

Das erste Armelement 24 enthält ein erstes Ende 24a und ein zweites Ende 24b. An dem ersten Ende 24a des ersten Armelements 24 ist ein erstes Verriegelungselement 26 positioniert. Das erste Verriegelungselement 26 enthält eine erste Fläche 26a, eine zweite Fläche 26b und eine dritte Fläche 26c. Die erste Fläche 26a ist dabei orthogonal bzw. senkrecht zu der zweiten und dritten Fläche 26b, 26c angeordnet. Die zweite Fläche 26b liegt gegenüber von der dritten Fläche 26c. An dem zweiten Ende 24b des ersten Armelements 24 ist ein erstes Drehlager 27 positioniert. Wie in Fig. 19 dargestellt, weist das Verriegelungselement 26 eine Höhe H auf.

Das erste Verriegelungselement 26 ist so ausgestaltet, dass es mit der ersten und zweiten Fläche 26a, 26b in die erste winklige Vertiefung 7a des Fußelements 6 aufgenommen werden kann.

Das zweite Armelement 25 enthält ein erstes Ende 25a und ein zweites Ende 25b. An dem ersten Ende 25a des zweiten Armelements 25 ist ein zweites Verriegelungselement 28 positioniert. Das zweite Verriegelungselement 28 enthält eine erste Fläche 28a, eine zweite Fläche 28b und eine dritte Fläche 28c. Die erste Fläche 28a ist dabei orthogonal bzw. senkrecht zu der zweiten und dritten Fläche 28b, 28c angeordnet. Die zweite Fläche 28b liegt gegenüber von der dritten Fläche 28c. An dem zweiten Ende 25b des ersten Armelements 25 ist ein zweites Drehlager 29 positioniert.

Das zweite Verriegelungselement 28 ist so ausgestaltet, dass es mit der ersten und zweiten Fläche 28a, 28b in die zweite winklige Vertiefung des Fußelements 6 aufgenommen werden kann. Das ersten Verriegelungselement 26 und das zweite Verriegelungselement 28 in ihrer Ausgestaltung identische sind, weist das zweite Verriegelungselement 28 ebenfalls eine Höhe H auf.

Das Verbindungsstück 30 verbindet das erste Armelement 24 mit dem zweiten Armelement 25, wodurch das erste und zweite Armelement 24, 25 in ihrer Längserstreckung parallel zueinander angeordnet sind. In der Mitte des Verbindungsstücks 30 ist ein Anschlagselement 31 positioniert.

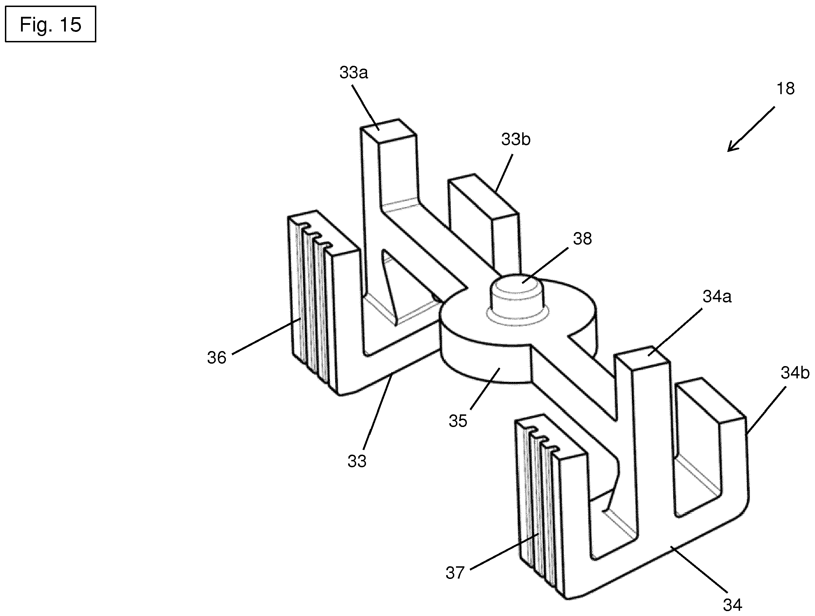

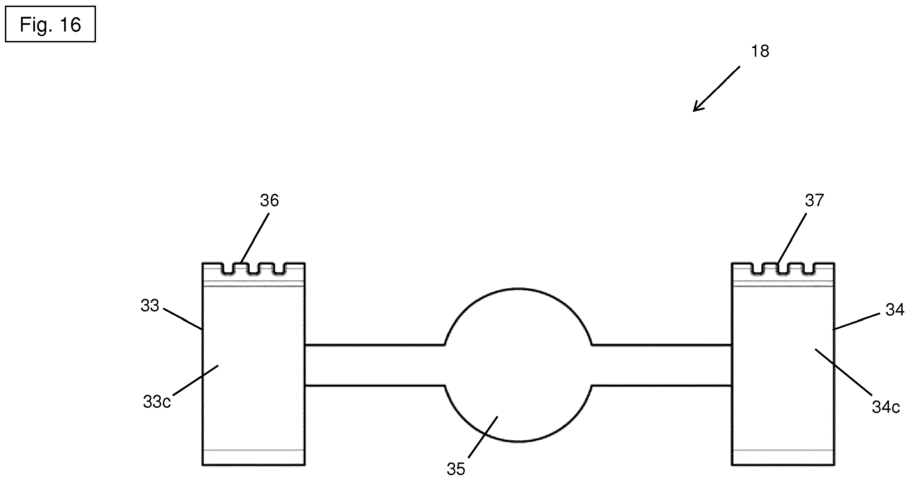

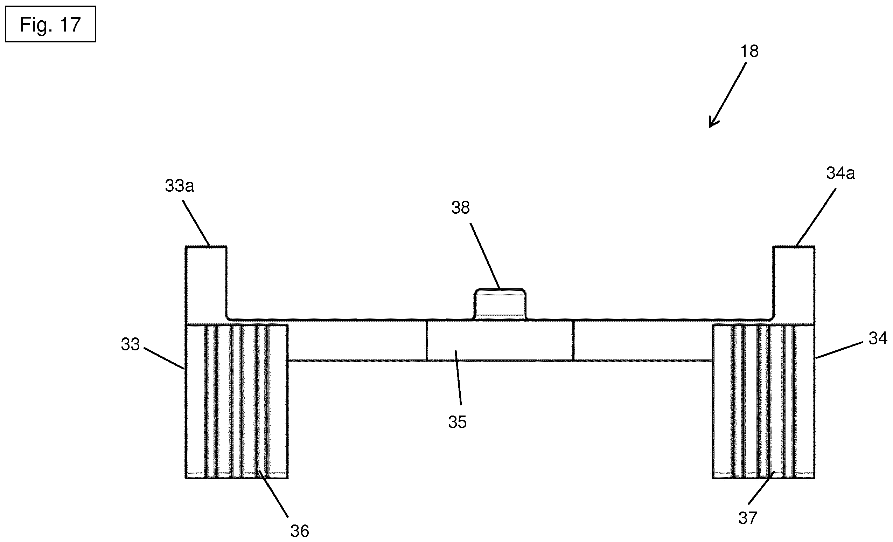

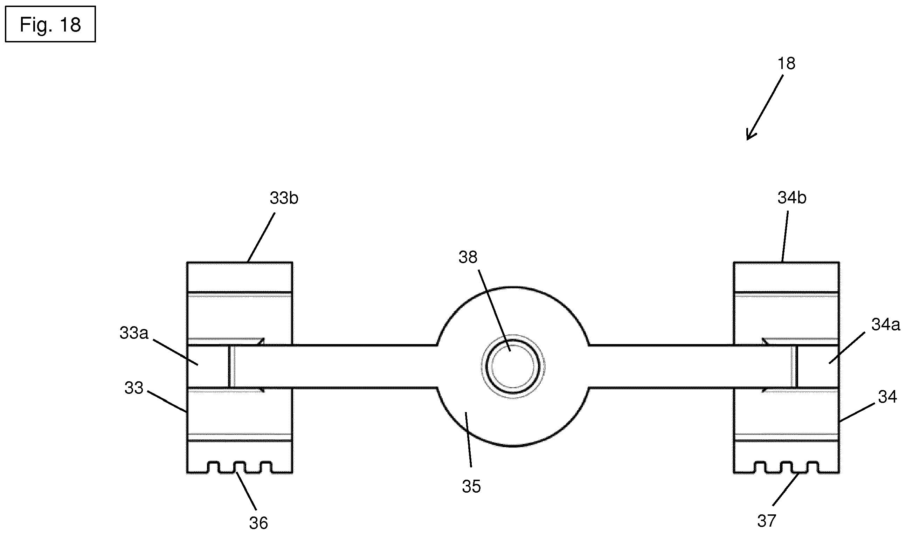

Die Sperreinrichtung 18 ist für sich in den Fig. 15 bis 19 dargestellt und enthält im Wesentlichen ein erstes ein erstes Sperrelement 33, ein zweites Sperrelement 34 und ein Mittelstück 35. Das erste Sperrelement 33 enthält ein erstes Kontaktelement 33a, eine erste Fläche 33b und eine zweite Fläche 33c. Das erste Kontaktelement 33a ist orthogonal bzw. senkrecht zu der ersten Fläche 33b angeordnet und gegenüberliegend zu der zweiten Fläche 33c angeordnet. Wie in Fig. 19 gezeigt, ist die zweite Fläche 33c in eine spitzen Winkel α zu der Horizontalen Z ausgebildet.

Das zweite Sperrelement 34 enthält ein zweites Kontaktelement 34a, eine erste Fläche 34b und eine zweite Fläche 34c. Das zweite Kontaktelement 34a ist orthogonal bzw. senkrecht zu der ersten Fläche 34b angeordnet und gegenüberliegend zu der zweiten Fläche 34c angeordnet.

Sowohl das erste Sperrelement 33 als auch das zweite Sperrelement 34 enthalten jeweils eine Führungseinrichtung 36, 37, durch welche die Sperreinrichtung 18 in der Adaptervorrichtung 8 bzw. in dem Adaptergehäuse 15 in Richtung B sowie gegen die Richtung B geführt wird. In den Figuren 15, 16, 17, 18, 22 und 25 ist die jeweilige Führungseinrichtung 36, 37 in Form eines Nut-Feder-Systems ausgestaltet.

Das Mittelstück 35 verbindet das erste Sperrelement 33 mit dem zweiten Sperrelement 34, sodass das erste und zweite Sperrelement 33, 34 parallel zueinander angeordnet sind. Darüber hinaus enthält das Mittelstück 35 ein Gegenanschlagelement 38 in seiner Mitte.

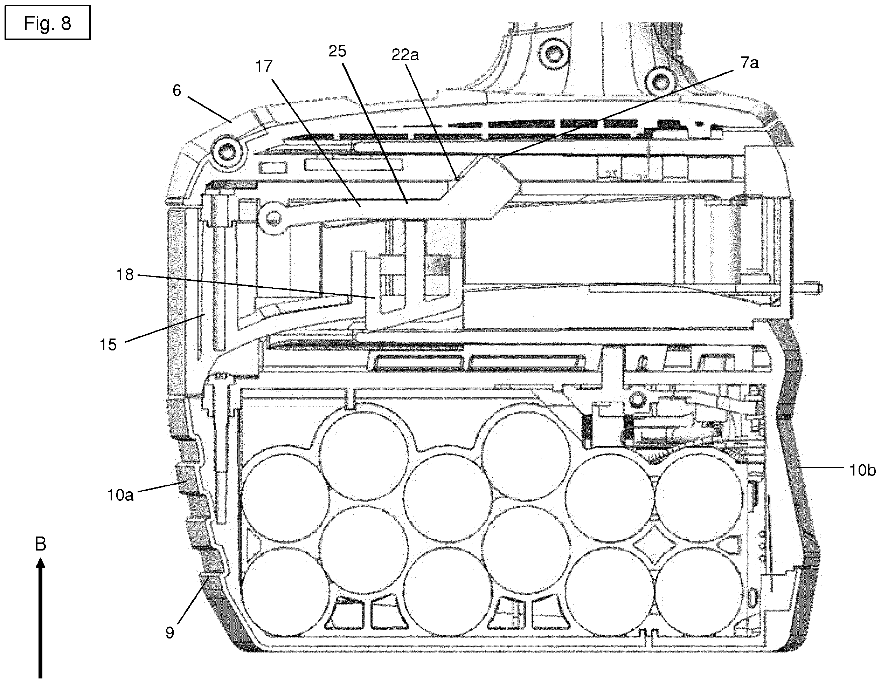

Wie in den Fig. 7, 8, 20 und 22 dargestellt und wie bereits vorstehend erwähnt, ist die Verriegelungseinrichtung 17 und die Sperreinrichtung 18 in dem Hohlraum 23 in der Adaptervorrichtung 8 bzw. des Adaptergehäuses 15 angeordnet.

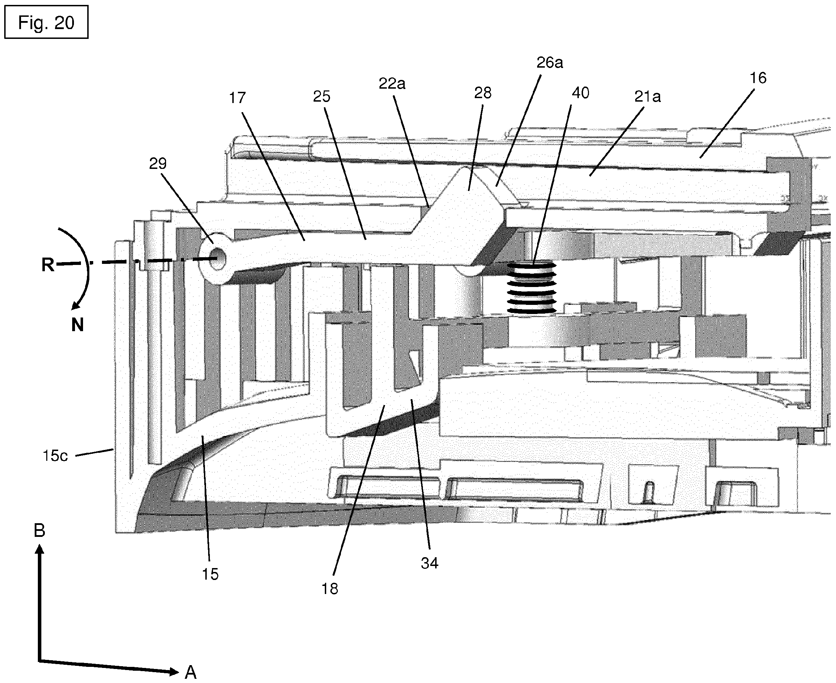

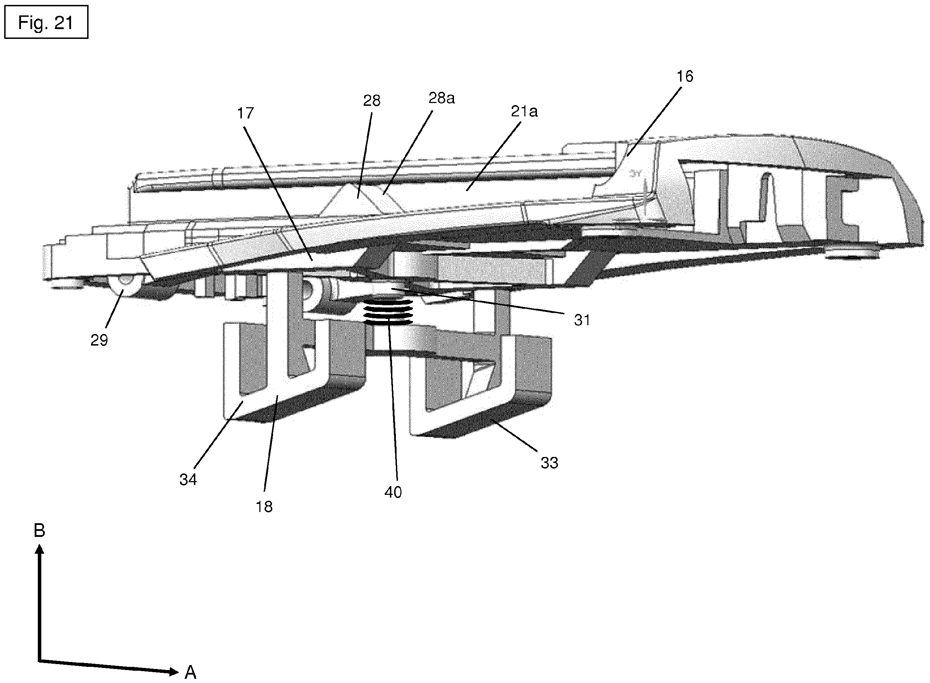

In Fig. 20, 21 und 22 ist eine perspektivische Ansicht durch die Adaptervorrichtung 8 gezeigt, wobei die Verriegelungseinrichtung 17 in Richtung B über der Sperreinrichtung 18 positioniert ist. Die Verriegelungseinrichtung 17 ist dabei so angeordnet, dass das erste und zweite Drehlager 27, 29 zu der zweiten Seitenwand 15c gerichtet sind. Das erste und zweite Verriegelungselement 26, 28 weisen mit den jeweiligen ersten Flächen 26a, 28a und zweiten Flächen 26b, 28b in Richtung B. Das in der Mitte des Verbindungsstücks 30 angeordnete Anschlagselement 31 weist gegen die Richtung B.

Die Sperreinrichtung 18 ist so angeordnet, dass die erste Fläche 33b des ersten Sperrelements 33 und die erste Fläche 34b des zweiten Sperrelements 34 in Richtung A weisen. Die zweite Fläche 33c des ersten Sperrelements 33 und die zweite Fläche 34c des zweiten Sperrelements 34 weisen gegen die Richtung B. Das erste Kontaktelement des ersten Sperrelements 33 und das zweite Kontaktelement des zweiten Sperrelements 34 weisen in Richtung B, wobei das erste Kontaktelement 33a zu dem ersten Armelement 24 und das zweite Kontaktelement 34a zu dem zweiten Armelement 25 gerichtet sind. Das Gegenanschlagelement 38 des Mittelstücks 35 ist in Richtung B ausgerichtet, sodass das Gegenanschlagelement 38 in Richtung B unterhalb des Anschlagselements 31 des Verbindungsstücks 30 positioniert ist.

Zwischen dem Anschlagselement 31 des Verbindungsstücks 30 und dem Gegenanschlagelement 38 des Mittelstücks 35 ist ein Druckfederelement 40 angeordnet. Die Federkraft des Druckfederelements 40 hält das Anschlagselement 31 in einem gewissen Abstand zu dem Gegenanschlagelement 38.

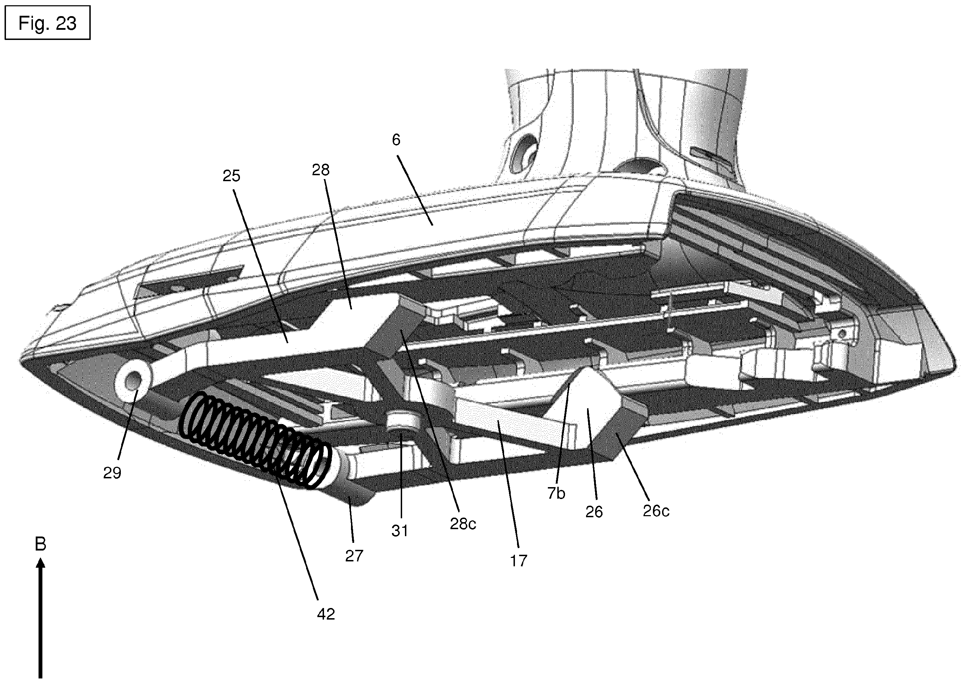

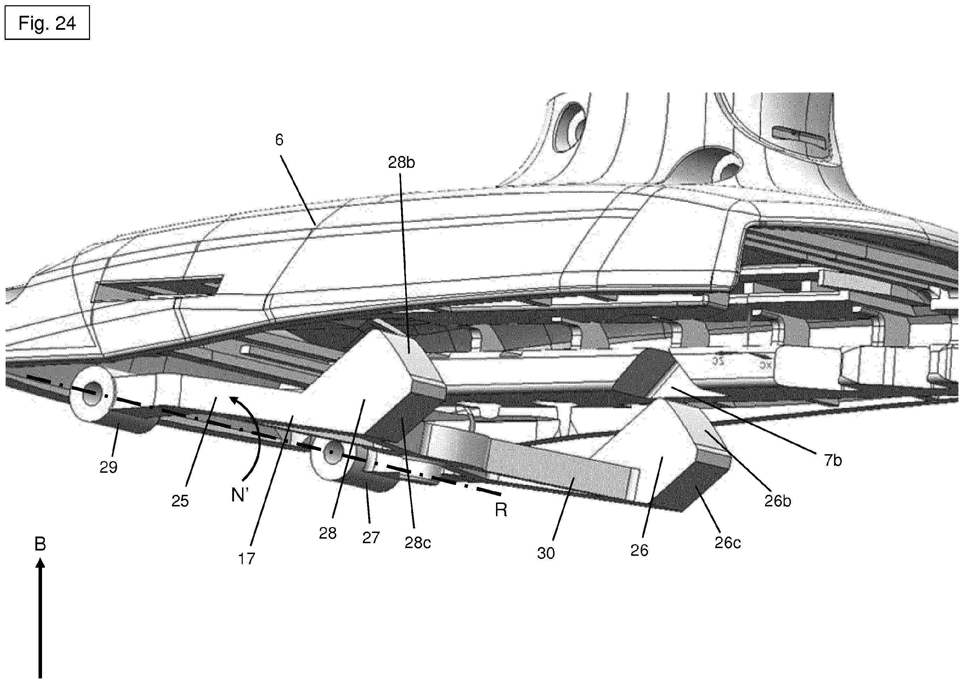

Die Verriegelungseinrichtung 17 ist reversibel zwischen einer ersten Position und einer zweiten Position einstellbar. In den Fig. 7, 8, 20, 21, 22, 23, 25 und 26 befindet sich die Verriegelungseinrichtung 17 der ersten Position. In der Fig. 24 befindet sich die Verriegelungseinrichtung 17 der zweiten Position. Damit die Verriegelungseinrichtung 17 von der ersten Position in die zweite Position gelangt, wird die Verriegelungseinrichtung 17 um das erste und zweite Drehlager 27, 29 sowie um die Schwenkachse R in Drehrichtung N geschwenkt. Um die Verriegelungseinrichtung 17 wieder von der zweiten Position in die erste Position zu bewegen, wird die Verriegelungseinrichtung 17 um das erste und zweite Drehlager 27, 29 sowie um die Schwenkachse R in Drehrichtung N' (vgl. Fig. 24) geschwenkt.

In der ersten Position erstrecken sich die erste und zweite Fläche 26a, 26b des ersten Verriegelungselements 26 durch die erste Öffnung 22a des Adapterdeckels 16 und liegen in der ersten winkligen Vertiefung 7a des Fußelements 6 an. Darüber hinaus erstrecken sich die erste und zweite Fläche 28a, 28b des zweiten Verriegelungselements 28 durch die zweite Öffnung 22b des Adapterdeckels 16 und liegen in der zweiten winkligen Vertiefung des Fußelements 6 an. Außerdem liegt das erste Verriegelungselement 26 an der ersten Führungsschiene 21a an und das zweite Verriegelungselement 28 liegt an der zweiten Führungsschiene 21b an. Mit Hilfe der Federkraft einer Torsionsfeder 42 ist die Verriegelungseinrichtung 17 in der ersten Position gehalten. Die Torsionsfeder 42 ist hierzu zwischen dem ersten und zweiten Drehlager 27, 29 positioniert. Gegen die Federkraft der Torsionsfeder 42 kann die Verriegelungseinrichtung 17 von der ersten Position in die zweite Position bewegt werden. Wenn die Verriegelungseinrichtung 17 sich in der zweiten Position befindet, befinden sich das erste Verriegelungselement 26 entgegen der Richtung B unterhalb der ersten Öffnung 22a des Adapterdeckels 16 und das zweite Verriegelungselement 28 entgegen der Richtung B unterhalb der zweiten Öffnung 22b des Adapterdeckels 16 (vgl. Fig. 24).

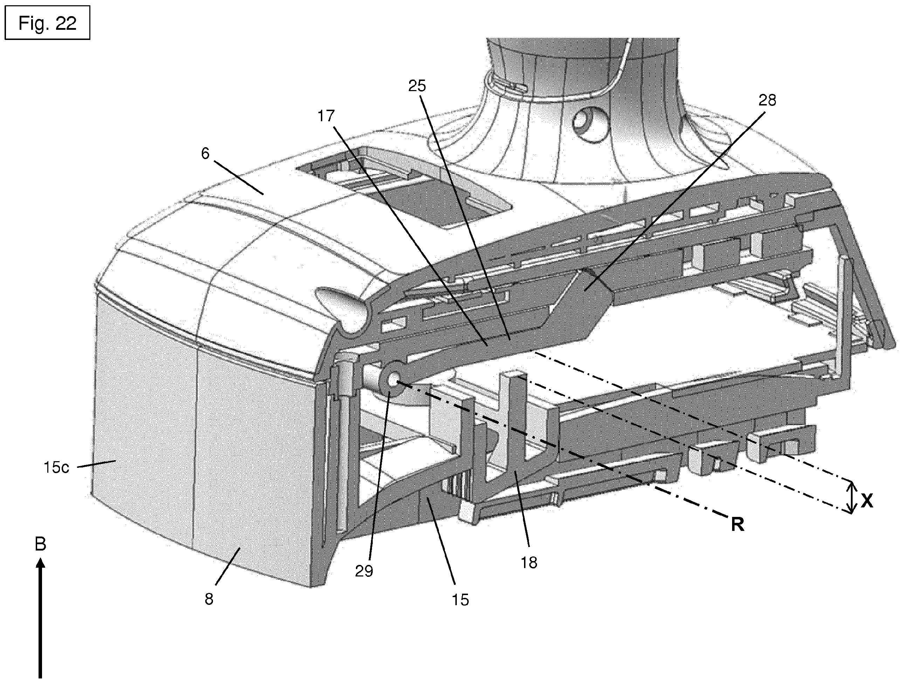

Die Sperreinrichtung 18 ist zwischen einer ersten Position und einer zweiten Position einstellbar. In den Fig. 7, 8, 20 und 22 befindet sich die Sperreinrichtung 18 in der ersten Position. In den Fig. 22, 25 und 26 befindet sich die Sperreinrichtung 18 in der zweiten Position. In der ersten Position liegt das erste Kontaktelement 33a des ersten Sperrelements 33 an dem ersten Armelement 24 der Verriegelungseinrichtung 17 an. Gleichwohl liegt das zweite Kontaktelement 34a des zweiten Sperrelements 34 an dem zweiten Armelement 25 der Verriegelungseinrichtung 17 an. Das Druckfederelement 40 zwischen der Verriegelungseinrichtung 17 und der Sperreinrichtung 18 ist dabei komprimiert.

Um die Sperreinrichtung 18 von der ersten Position in die zweite Position zu bewegen, wird die Sperreinrichtung 18 gegen die Richtung B verschoben. Die Federkraft des Druckfederelements 40 drückt die Sperreinrichtung 18 von der ersten Position in die zweite Position.

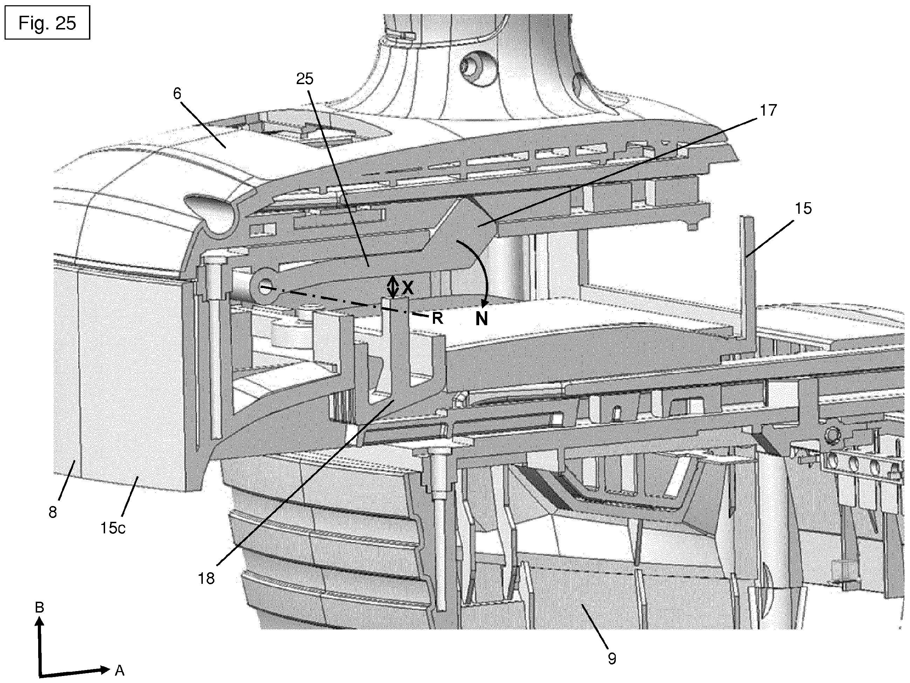

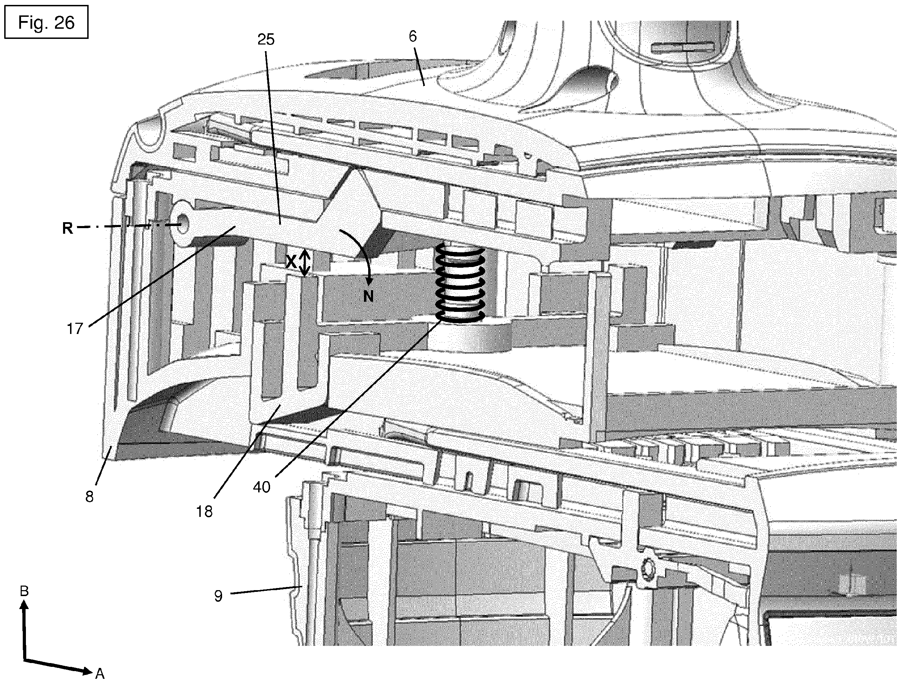

Wenn sich die Sperreinrichtung 18 in der ersten Position befindet, drückt das erste und zweite Kontaktelement 33a, 34a der Sperreinrichtung 18 entsprechend gegen das erste und zweite Armelement 24, 25 der Verriegelungseinrichtung 17, um so die Verriegelungseinrichtung 17 in der ersten Position zu halten. Wenn sich hingegen die Sperreinrichtung 18 in der zweiten Position befindet, drückt das erste und zweite Kontaktelement 33a, 34a der Sperreinrichtung 18 nicht mehr gegen das erste und zweite Armelement 24, 25 der Verriegelungseinrichtung 17, sodass die Verriegelungseinrichtung 17 von der ersten Position in die zweite Position bewegbar ist. Aufgrund der Federkraft der Torsionsfeder 42 wird jedoch die Verriegelungseinrichtung 17 in der ersten Position gehalten. In der zweiten Position erstreckt sich die zweite Fläche 33c des ersten Sperrelements 33 durch die erste Öffnung 22a des Adaptergehäuses 15 und die zweite Fläche 34c des zweiten Sperrelements 34 erstreckt sich durch die zweite Öffnung 22b des Adaptergehäuses 15 (vgl. Fig. 25, 26).

Wenn, wie in Fig. 1, 7 und 8 gezeigt, der Akkumulator 9 mit der Adaptervorrichtung 8 verbunden ist, befindet sich die Sperreinrichtung 18 in der ersten Position. Dies wird dadurch bedingt, dass die obere Seite 10c des Akkugehäuses 10 gegen die zweite Fläche 33c des ersten Sperrelements 33 und gegen die zweite Fläche 34c des zweiten Sperrelements 34 drückt, wenn der Akkumulator 9 gegen die Richtung A an die untere Seitenwand des Adaptergehäuses 15 geschoben ist und folglich der Akkumulator mit der unteren Seitenwand des Adaptergehäuses 15 verbunden ist. Die Bewegung des Akkumulators gegen die Richtung A bewirkt somit eine Bewegung der Sperreinrichtung von der zweiten Position in Richtung B zu der ersten Position. Mit Hilfe der spezifischen Anordnung und Ausgestaltung der ersten Fläche, der zweiten Fläche und der Führungseinrichtung wird daher die Bewegung der Sperreinrichtung in bzw. gegen die Richtung B erzeugt, wenn entsprechend der Akkumulator in bzw. gegen die Richtung A bewegt wird.

Wenn, wie in Fig. 2, 25 und 26 gezeigt, der Akkumulator 9 von dem Boden 15a des Adaptergehäuses 15 in Richtung A gezogen ist, drückt die obere Seite 10c des Akkugehäuses 10 nicht mehr gegen die zweite Fläche 33c des ersten Sperrelements 33 und zweiten Fläche 34c des Sperrelements 34 der Sperreinrichtung 18. Aufgrund der Federkraft des Druckfederelements 40 zwischen der Verriegelungseinrichtung 17 und der Sperreinrichtung 18 wird die Sperreinrichtung 18 von der ersten Position in die zweite Position bewegt. Es entsteht ein Abstand X zwischen der Verriegelungseinrichtung 17 und der Sperreinrichtung 18 (vgl. Fig. 22, 25, 26). Die Verriegelungseinrichtung 17 wird daher nicht mehr durch die Sperreinrichtung 18 in Richtung A gedrückt, wenn sich die Sperreinrichtung 18 in der zweiten Position befindet. Lediglich die Federkraft der Torsionsfeder 42 drückt auf die Verriegelungseinrichtung 17 und veranlasst diese in der ersten Position zu bleiben. Je nach Federkraft der Torsionsfeder 42 kann die Verriegelungseinrichtung 17 bereits um ein gewisses Maß um die Schwenkachse R in Drehrichtung N geschwenkt sind und sich nicht mehr komplett in der ersten Position befinden (d.h. erste und zweite Flächen 33c, 34c der Sperrelemente 33, 34 liegen vollständig in den Vertiefungen 7a des Fußelements 6 an), wenn sich die Sperreinrichtung 18 nicht mehr in der ersten Position befindet.

Wie bereits vorstehend beschrieben, kann die Verriegelungseinrichtung 17 von der ersten Position um die Schwenkachse R in Drehrichtung N in die zweite Position geschwenkt werden. Die Verriegelungseinrichtung 17 wird jedoch nur von der ersten Position in die zweite Position bewegt, wenn die Adaptervorrichtung 8 in Richtung A von dem Fußelement 6 gezogen wird. Durch die Relativbewegung der Adaptervorrichtung 8 zu dem Fußelement 6 werden das erste Sperrelement 33 aus der ersten winkligen Vertiefung 7a des Fußelements 6 und ebenso die zweite Sperrelement 34 aus der zweiten winkligen Vertiefung des Fußelements 6 gedrückt. Dies ist möglich, da die Verriegelungseinrichtung 17 um die Schwenkachse R in Drehrichtung N und folglich die beiden Sperrelemente 33, 34 aus den entsprechenden Vertiefungen 7a schwenken können (vgl. Fig. 24).

Wenn der Akkumulator 9 von der Adaptervorrichtung 8 entfernt ist, sperrt die Sperreinrichtung 18 nicht mehr die Verriegelungseinrichtung 17 in der ersten Position, sodass die Adaptervorrichtung 8 von dem Fußelement 6 der Werkzeugmaschine 1 gegen die Federkraft der Torsionsfeder 42 gezogen werden kann. Wenn jedoch der Akkumulator 9 mit der Adaptervorrichtung 8 verbunden ist, sperrt die Sperreinrichtung 18 die Verriegelungseinrichtung 17, sodass die Adaptervorrichtung 8 nicht von dem Fußelement 6 der Werkzeugmaschine 1 gezogen werden kann. Hierdurch kann ein ungewolltes Entfernen bzw. Abziehen der Adaptervorrichtung 8 von dem Fußelement 6 verhindert werden, wenn lediglich der Akkumulator 9 von der Werkzeugmaschine 1 entfernt werden soll.

## Patentansprüche

1. Adaptervorrichtung (8) zum Verbinden eines Akkumulators (9) mit einer Werkzeugmaschine (1), enthaltend
- eine Verriegelungseinrichtung (17) zum Verriegeln der Adaptervorrichtung (8) mit der Werkzeugmaschine (1); sowie
- eine Sperreinrichtung (18) zum Sperren der Verriegelungseinrichtung (17),
**dadurch gekennzeichnet, dass** die Verriegelungseinrichtung (17) reversibel von einer ersten Position in eine zweite Position einstellbar ist, wobei in der ersten Position die Adaptervorrichtung (8) mit der Werkzeugmaschine (1) fest verbunden ist und in der zweiten Position die Adaptervorrichtung (8) von der Werkzeugmaschine (1) lösbar ist, und die Sperreinrichtung (18) reversibel von einer ersten Position in eine zweite Position einstellbar ist, wobei die Sperreinrichtung (18) in der ersten Position die Verriegelungseinrichtung (17) in der ersten Position sperrt und die Sperreinrichtung (18) in der zweiten Position die Verriegelungseinrichtung (17) nicht sperrt, sodass die Verriegelungseinrichtung (17) von der ersten Position in die zweite Position bewegbar ist.

2. Adaptervorrichtung (8) nach Anspruch 1,
**dadurch gekennzeichnet, dass** die Sperreinrichtung (18) durch ein Verbinden des Akkumulators (9) mit der Adaptervorrichtung (8) von der zweiten Position in die erste Position bewegbar ist.

3. Adaptervorrichtung (8) nach Anspruch 1 oder 2,
**dadurch gekennzeichnet, dass** ein Druckfederelement (40) vorgesehen ist, wodurch ein von der Federkraft des Druckfederelements (40) erzeugter Abstand (X) zwischen der Verriegelungseinrichtung (17) und der Sperreinrichtung (18) erzeugt wird, wenn kein Akkumulator (9) mit der Adaptervorrichtung (8) verbunden ist, wobei die Verriegelungseinrichtung (17) wenigstens ein erstes Verriegelungselement (26, 28) enthält und der Abstand (X) mindestens der Höhe (H) des Verriegelungselements (26, 28) entspricht.

4. Adaptervorrichtung (8) nach Anspruch 3,
**dadurch gekennzeichnet, dass** die Verriegelungseinrichtung (17) durch die Federkraft des Druckfederelements (40) in der ersten Position gehalten wird.

5. Adaptervorrichtung (8) nach Anspruch 3 oder 4,
**dadurch gekennzeichnet, dass** die Verriegelungseinrichtung (17) so ausgestaltet ist, dass die Verriegelungseinrichtung (17) gegen die Federkraft des Druckfederelements (40) von der ersten Position in die zweite Position wechselt, wenn die Adaptervorrichtung (8) relativ zu der Werkzeugmaschine (1) bewegt wird.

6. Adaptervorrichtung (8) nach wenigstens einem der Ansprüche 1 bis 5,
**dadurch gekennzeichnet, dass** die Verriegelungseinrichtung (17) in Form einer Schnappverbindung ausgestaltet ist.

## Claims

1. Adapter device (8) for connecting an accumulator (9) to a power tool (1), comprising
- a latching device (17) for latching the adapter device (8) to the power tool (1), and
- a locking device (18) for locking the latching device (17),
**characterised in that** the latching device (17) is adjustable reversibly from a first position to a second position, the adapter device (8) being firmly connected to the power tool (1) in the first position and adapter device (8) being detachable from the power tool (1) in the second position, and the locking device (18) being reversibly adjustable from a first position to a second position, wherein the locking device (18) locks the latching device (17) in the first position and the locking device (18) does not lock the latching device (17) in the second position, so that the latching device (17) is movable from the first position to the second position.

2. Adapter device (8) according to Claim 1,
**characterised in that** the locking device (18) is movable from the second position to the first position by connection of the accumulator (9) to the adapter device (8).

3. Adapter device (8) according to Claim 1 or 2,
**characterised in that** there is provided a compression spring element (40) whereby a distance (X) generated by the spring force of the compression spring element (40) is generated between the latching device (17) and the locking device (18) if no accumulator (9) is connected to the adapter device (8), wherein the latching device (17) includes at least one first latching element (26, 28) and the distance (X) is at least equal to the height (H) of the latching element (26, 28).

4. Adapter device (8) according to Claim 3,
**characterised in that** the latching device (17) is held in the first position by the spring force of the compression spring element (40).

5. Adapter device (8) according to Claim 3 or 4,
**characterised in that** the latching device (17) is configured such that the latching device (17) switches from the first position to the second position against the spring force of the compression spring element (40) when the adapter device (8) is moved relative to the power tool (1).

6. Adapter device (8) according to at least one of Claims 1 to 5,
**characterised in that** the latching device (17) is in the form of a snap connection.

## Revendications

1. Dispositif adaptateur (8) pour relier un accumulateur (9) à une machine-outil (1), contenant :
- un dispositif de verrouillage (17) pour verrouiller le dispositif adaptateur (8) sur la machine-outil (1), et
- un dispositif de blocage (18) pour bloquer le dispositif de verrouillage (17),
**caractérisé en ce que** le dispositif de verrouillage (17) peut être réglé de manière réversible d'une première position à une seconde position, dans lequel, dans la première position, le dispositif adaptateur (8) est fixement relié à la machine-outil (1) et, dans la seconde position, le dispositif adaptateur (8) peut être retiré de la machine-outil (1), et le dispositif de blocage (18) peut être réglé de manière réversible d'une première position à une seconde position, dans lequel le dispositif de blocage (18) dans la première position bloque le dispositif de verrouillage (17) dans la première position et le dispositif de blocage (18) dans la seconde position ne bloque pas le dispositif de verrouillage (17), de sorte que le dispositif de verrouillage (17) peut être déplacé de la première position à la seconde position.

2. Dispositif adaptateur (8) selon la revendication 1,
**caractérisé en ce que** le dispositif de blocage (18) peut être déplacé de la seconde position à la première position en reliant l'accumulateur (9) au dispositif adaptateur (8).

3. Dispositif adaptateur (8) selon la revendication 1 ou 2,
**caractérisé en ce qu'**un élément de ressort de compression (40) est prévu, en sorte qu'une distance (X) créée par la force élastique de l'élément de ressort de compression (40) est créée entre le dispositif de verrouillage (17) et le dispositif de blocage (18), lorsque aucun accumulateur (9) n'est relié au dispositif adaptateur (8), dans lequel le dispositif de verrouillage (17) contient au moins un premier élément de verrouillage (26, 28) et la distance (X) correspond au moins à la hauteur (H) de l'élément de verrouillage (26, 28).

4. Dispositif adaptateur (8) selon la revendication 3,
**caractérisé en ce que** le dispositif de verrouillage (17) est maintenu dans la première position par la force élastique de l'élément de ressort de compression (40) .

5. Dispositif adaptateur (8) selon la revendication 3 ou 4,
**caractérisé en ce que** le dispositif de verrouillage (17) est configuré de sorte que le dispositif de verrouillage (17) passe de la première position à la seconde position à l'encontre de la force élastique de l'élément de ressort de compression (40) lorsque le dispositif adaptateur (8) est déplacé par rapport à la machine-outil (1).

6. Dispositif adaptateur (8) selon l'une des revendications 1 à 5,
**caractérisé en ce que** le dispositif de verrouillage (17) est configuré sous la forme d'une liaison par encliquetage.
